# EUROPEAN PATENT APPLICATION

(11) **EP 1 714 726 A1**
(43) Date of publication of application: **25.10.2006**
(21) Application number: 05252394.1
(22) Date of filing: 18.04.2005
(51) Int. Cl.: B23H 7/26

(54) **Direct-acting electrode position controller for electrical discharge machine**

(71) Applicant: Li, Chien-Hsien, Lu Chou City, Taipei Hsien (TW)
(72) Inventor: Li, Chien-Hsien, Lu Chou City, Taipei Hsien (TW)
(74) Representative: Holt, Daniel Richard

(57) **Abstract**

A direct-acting electrode position controller is mounted on an electrical discharge machine between a Z-direction main shaft and an electrode clamp of the machine to directly elevate or lower the electrode clamp and an electrode clamped thereto within a predetermined travel distance while the main shaft is unmoved. The direct-acting electrode position controller includes an upper fixing seat, a middle guiding seat, a plurality of movable posts, a server, a server carrier, apushplate, a plurality of movable post pads, a lower fixing seat, a dustproof ring, an O-ring, a plurality of springs, and a plurality of connecting screws.

## Description

### FIELD OF THE INVENTION

The present invention relates to a position controller, and more particularly to a direct-acting electrode position controller mounted on an electrical discharge machine to quickly and precisely control the lowering and elevating of an electrode of the electrical discharge machine during the operations of slag removal and electric discharge machining, respectively.

### BACKGROUND OF THE INVENTION

In an electric discharge machining process, electric energy is converted into thermal energy to quickly melt a workpiece. More specifically, in the electric discharge machining, since an electrode and a workpiece are positioned in a processing solution with an extremely small gap existed between them, a transition electric arc discharge phenomenon occurs to produce a thermal effect on the workpiece, so that marks are produced on the workpiece. When the electric discharge machining is repeatedly carried on, the workpiece is finally machined to a desired shape. In the process of electric discharge, the processing solution is subjected to discharge pressure and thermal effect and becomes gasified. At this point, molten part of the workpiece deposits in the processing solution to form slag, which is removed by discharging along with the processing solution.

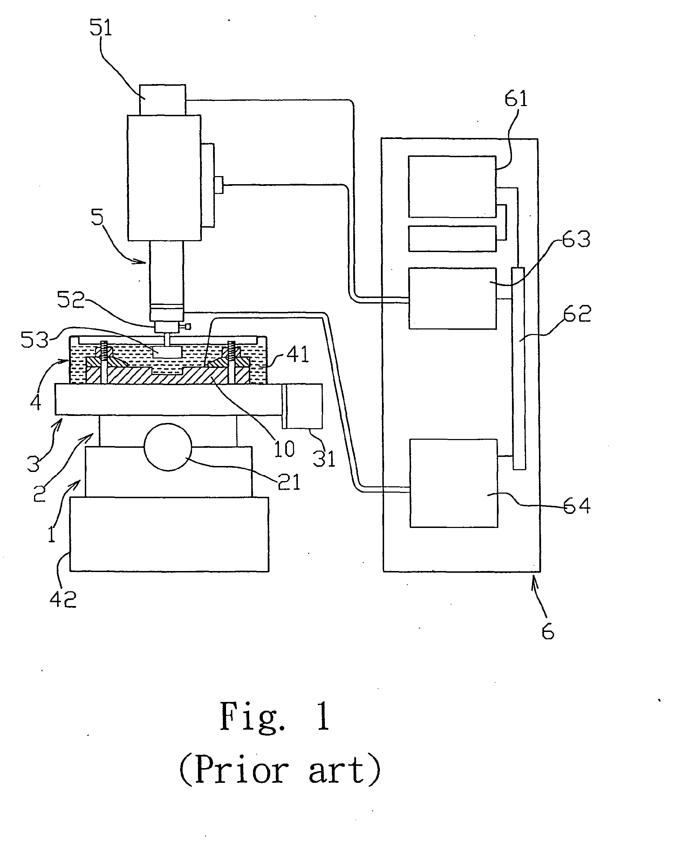

Fig. 1 shows a general electrical dischargemachine, which includes a bed 1, a Y-direction seat 2, an X-direction seat 3, a processing cell 4, and a main shaft 5.

The Y-direction seat 2 is mounted on a top of the bed 1 and driven by a Y-direction servomotor 21. The X-direction seat 3 is mounted on a top of the Y-direction seat 2 and driven by an X-direction servomotor 31. The processing cell 4 is mounted on the top of the X-direction seat 3 to contain an amount of processing solution 41 therein and has a workpiece 10 fixedly positioned therein.
A processing solution tank 42 is provided to replenish the processing cell 4 at any time. The main shaft 5 is vertically located above the processing cell 4 and driven by a Z-direction servomotor 51 to vertically move upward or downward. An electrode 53 is connected to a lower end of the main shaft 5 via an electrode clamp 52 to enable electric discharge machining of the workpiece 10 in the processing cell 4. The electrical discharge machine also includes an electrical control box 6 for controlling movements of the above-mentioned members. In the electrical control box 6, there are provided, for example, a central computer control system 61, and a servomotor travel and position controller 63 and a discharge effect crystal 64 connected to the central computer control system 61 via a transmission interface 62. The servomotor travel and position controller 63 controls the movements of the servomotors 21, 31, 51, and thereby controls the movements and positions of shafts of the servomotors 21, 31 and the main shaft 5. The discharge effect crystal 64 is also electrically connected to the electrode clamp 52 and the workpiece 10 to enable the electric discharge machining operation.

During the process of electric discharge machining, the Z-direction servomotor 51 moves the electrode 53 to a lowered position to keep a very fine gap between the electrode 53 and the workpiece 10. During the process of slag removal, the Z-direction servomotor 51 moves the electrode 53 to an elevated position to facilitate the removal of slag from the processing solution 41.

In other words, in the above-described general electrical discharge machine, the electrode 53 is elevated or lowered by a driving force of the Z-direction servomotor 51 transmitted to the electrode 53 via the main shaft 5. As it is known, a height difference between the lowered position of the electrode 53 in the process of electric discharge machining and the elevated position of the electrode 53 in the process of slag removal is extremely small. However, when the main shaft 5 of the Z-direction servomotor 51 brings the electrode 53 to move upward or downward, an inertia effect would cause the electrode 53 to be moved downward or upward by an overlarge distance.
This condition not only slows down the electric discharge machining and slag removal operations, but also produces errors in the position of the electrode 53 to adversely affect the precision of machining. Moreover, the transmission of the driving force of the Z-direction servomotor 51 to the electrode 53 via the considerably long main shaft 5 tends to oscillate the electrode 53 and results in incorrect response to the extremely small gap between the electrode 53 and the workpiece 10 to reduce the machining quality.

### SUMMARY OF THE INVENTION

It is therefore a primary object of the present invention to provide a direct-acting electrode position controller for electrical discharge machine, so as to quickly and precisely control the position of the electrode of the electrical discharge machine during the electric discharge machining and slag removal operations, and thereby increases the machining speed and ensures good machining quality.

To achieve the above and other objects, the direct-acting electrode position controller for electrical discharge machine according to the present invention is mounted between a Z-direction main shaft and an electrode clamp of the electrical discharge machine, so as to directly move the electrode clamp and an electrode clamped thereto upward or downward within a predetermined travel distance while the main shaft is unmoved, enabling speedy and precise machining of a workpiece through electric discharge and removal of slag produced in the machining operation.

According to an operable embodiment of the present invention, the direct-acting electrode position controller includes an upper fixing seat fixedly connected to a lower end of the main shaft of the electrical discharge machine; a middle guiding seat fixedly connected to a bottom of the upper fixing seat, and having a plurality of vertical guiding holes internally provided thereon, and a server mounting hole provided at a central area thereof; a plurality of movable posts, each of which has an expanded head portion and a shank portion, the shank portions being separately slidably mounted in the guiding holes with the expanded head portions exposed from and located on a top of the middle guiding seat; a server mounted in the server mounting hole at the center of the middle guiding seat, the server including a push rod, which is controlled by a controller in an electrical control box of the electrical discharge machine to move upward or downward; a server carrier fixed to a bottom of the middle guiding seat to support the server thereon; a push plate located in a recession formed at the bottom of the upper fixing seat and fixedly connected to a top of the movable posts to abut on a top of the push rod of the server and thereby moving upward or downward along with the push rod; a plurality o fmovable post pads located below the middle guiding seat corresponding to bottoms of the movable posts, a distance between a top of each of the pads and a bottom of the expanded head portion of each movable post corresponding to the pad being larger than a height of the middle guiding seat, such that a clearance exists between the top of the pads and the bottom of the middle guiding seat, or between the bottoms of the expanded head portions of the movable posts and the top of the middle guiding seat, and the expanded head portions and the pads of the movable posts serving as upper and lower limits in the travel distance of the movable posts; and a lower fixing seat fixedly connected at a bottom to the electrode clamp, and at a top to the bottoms of the movable posts via the movable post pads. With these arrangements, when the push rod of the server is driven to move upward or downward, the push plate, the movable posts, the movable post pads, the lower fixing seat, and the electrode are synchronously moved upward or downward quickly within a predetermined travel distance while the main shaft is unmoved. In this manner, the electrode is not interfered by oscillation thereof caused by the main shaft, and the workpiece may be efficiently and precisely machined through electric discharge.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 shows a general electrical discharge machine;
Fig. 2 shows an electrical discharge machine equipped with a direct-acting electrode position controller of the present invention;
Fig. 3 is an exploded perspective view of the direct-acting electrode position controller of the present invention;
Fig. 4 is an assembled perspective view of Fig..3;
Fig. 5 is a first sectional view of the direct-acting electrode position controller of Fig. 4;
Fig. 6 is a second sectional view of the direct-acting electrode position controller of Fig. 4 showing a lower fixing seat thereof is in a lowered position for machining operation; and
Fig. 7 is similar to Fig. 6, but showing the lower fixing seat thereof is in an elevated position for slag removal operation.

### DETAILED DESCRIPTION OF THE PREFERRED EMBODIMENTS

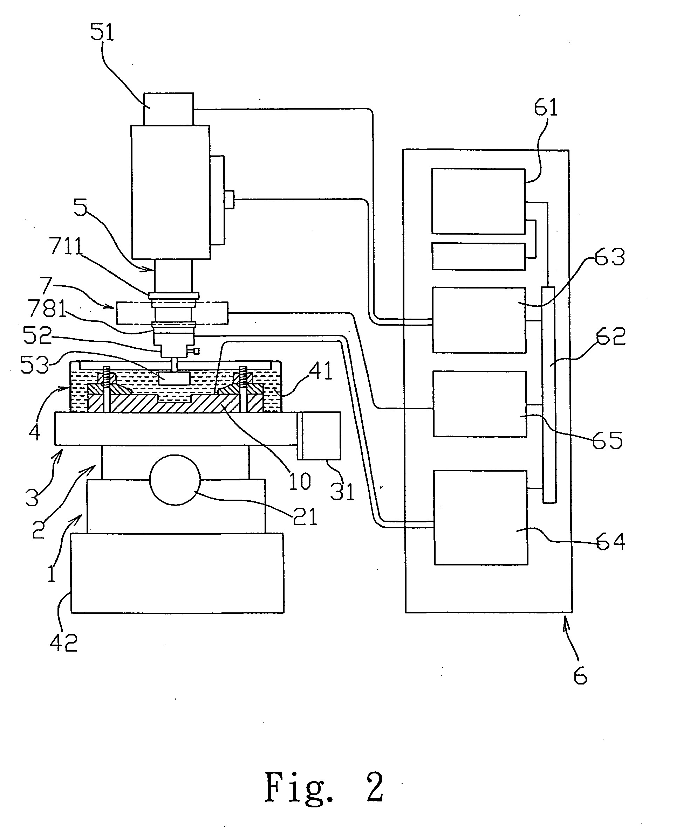

Please refer to Fig. 2 that shows an electrical discharge machine equipped with a direct-acting electrode position controller 7 of the present invention. As shown, the electrical discharge machine in connection with the present invention is generally structurally similar to the electrical discharge machine shown in Fig. 1, and includes a bed 1, a Y-direction seat 2, an X-direction seat 3, a process solution cell 4 for holding an amount of process solution 41 therein, a main shaft 5, a Y-direction servomotor 21, an X-direction servomotor 31, a process solution tank 42, a Z-direction servomotor 51, an electrode clamp 52, an electrode 53, an electrical control box 6, a central computer control system 61, a transmission interface 62, a servomotor travel and position controller 63, and a discharge effect crystal 64. However, the electrical discharge machine shown in Fig. 2 is further equipped with a direct-acting electrode position controller 7, which is mounted between the main shaft 5 and the electrode clamp 5 for controlling micro elevating and lowering of the electrode 53 within a predetermined travel distance while the main shaft 5 is unmoved, so that electric discharge machining and slag removal alternate in a speedy and precise manner to enable high operating efficiency.

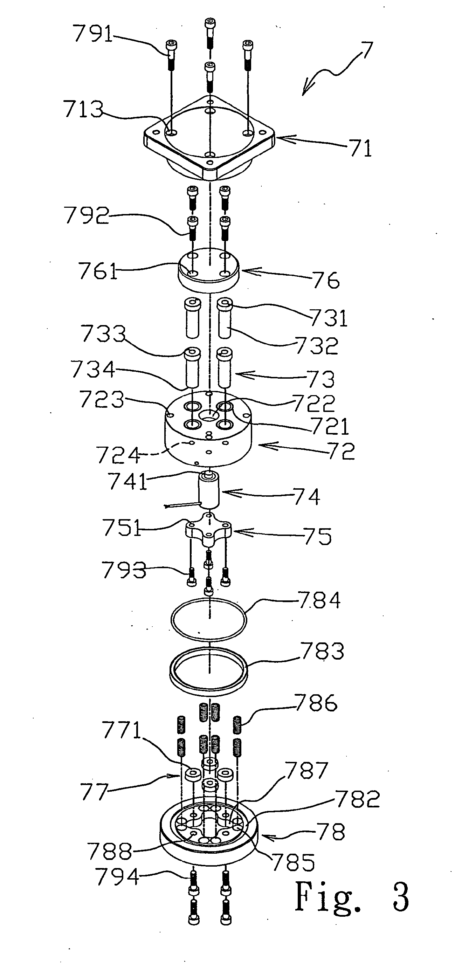

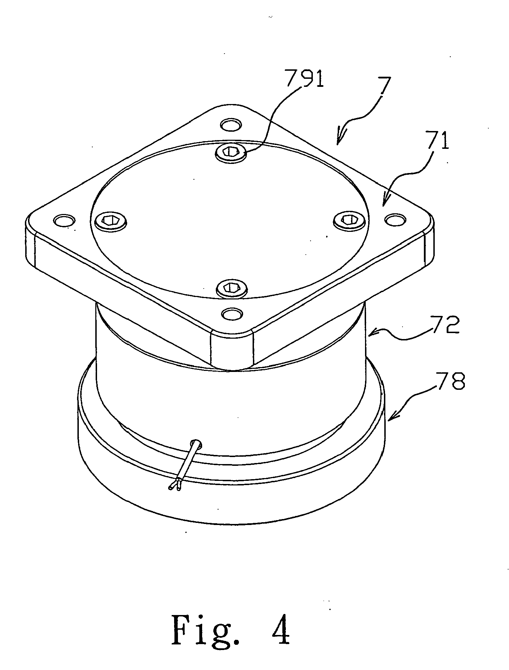

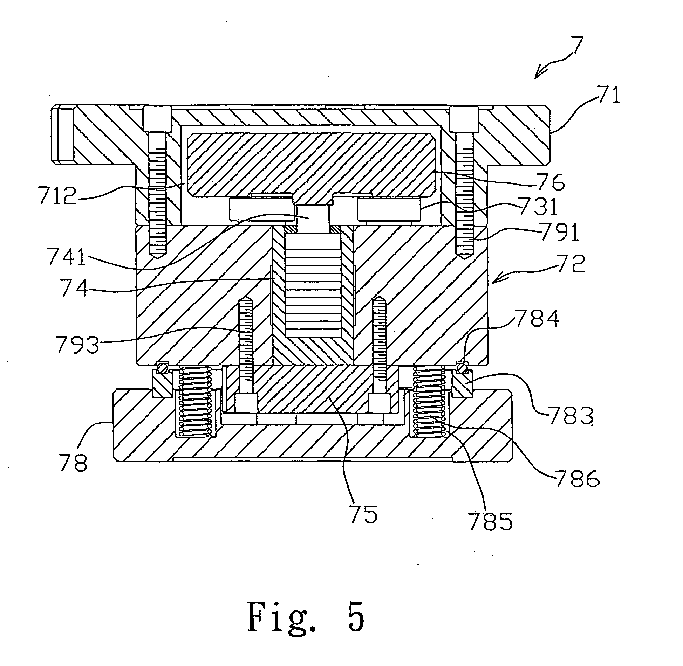

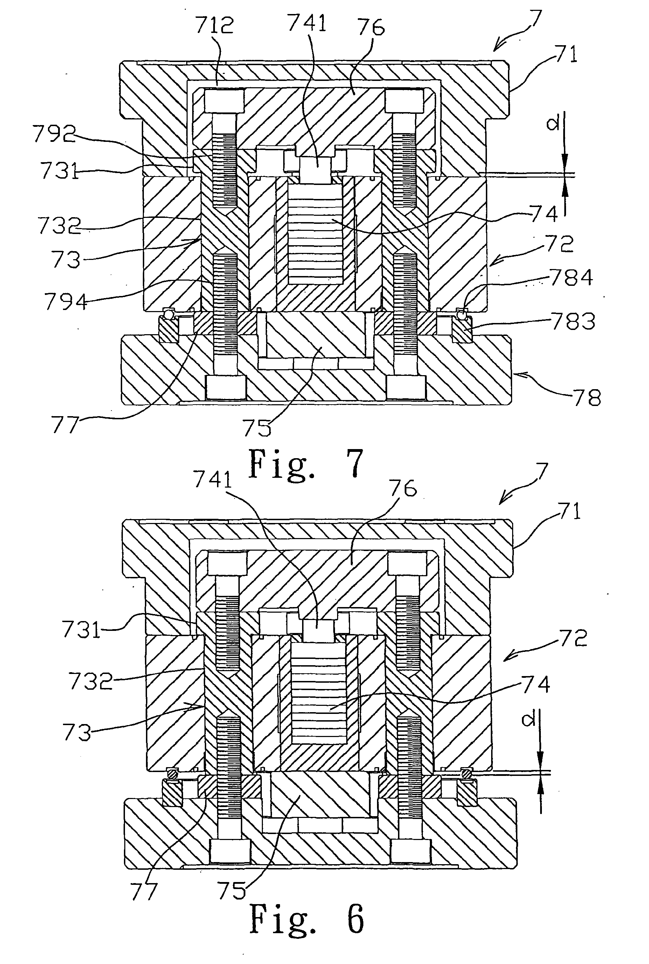

Please refer to Figs. 3 and 4 that are exploded and assembled perspective views, respectively, of the direct-acting electrode position controller 7 of the present invention, and to Figs. 5 and 6 that are two sectional views of the direct-acting electrode position controller 7 of the present invention. As shown, the direct-acting electrode position controller 7 includes an upper fixing seat 71, a middle guiding seat 72, a plurality of movable posts 73, a server 74, a server carrier 75, a push plate 76, a plurality of movable post pads 77, and a lower fixing seat 78.

The upper fixing seat 71 is fixedly connected to a lower end of the main shaft 5. In an operable embodiment of the present invention, the upper fixing seat 71 is connected to the lower end of the main shaft 5 via a connecting plate 711, as shown in Fig. 2. As can be seen from Fig. 5, the upper fixing seat 71 has a recession 712 formed on a bottom thereof for receiving the push plate 76 therein.

The middle guiding seat 72 is fixedly connected to the bottom of the upper fixing seat 71, and internally provided with a plurality of vertical guiding holes 721 and a central server mounting hole 722.

The movable posts 73 are, for example, cylindrical posts having an expanded head portion 731 and a shank portion 732 each. The shank portions 732 are separately slidably received in the guiding holes 721 on the middle guiding seat 72 with the expanded head portions 731 exposed from and located at a top of the middle guiding seat 72 to serve as an upper limit of a travel of the movable posts 73.

The server 74 is mounted in the server mounting hole 722 at the center of the middle guiding seat 72, and includes a push rod 741 that moves upward and downward under control of a controller 65 included in the electrical control box 6 of the electrical discharge machine and is connected to the central computer control system 61 via the transmission interface 62.

The server carrier 75 is fixed to a bottom of the middle guiding seat 72 for supporting the server 74 thereon.

The push plate 76 is received in the recession 712 at the bottom of the upper fixing seat 71 to press against an upper end of the push rod 741 of the server 74, so as to move upward and downward along with the push rod 741. The push plate 76 is also fixedly connected to the tops of the head portions 731 of the movable posts 73, as shown in Figs. 5 and 6.

The movable post pads 77 are located below the middle guiding seat 72 corresponding to lower ends of the movable posts 73, and serve as a lower limit of the travel of the movable posts 73. Please refer to Figs. 6 and 7. A distance between a top of each pad 77 and a bottom of each corresponding head portion 731 of the movable post 73 is slightly larger than a height of the middle guiding seat 72. That is, a vertical distance within which the movable posts 73 are allowed to slide is slightly larger than the height of the middle guiding seat 72, so that a clearance d exists between the top of the pads 77 and the bottom of the middle guiding seat 72 (see Fig. 6) or between the bottom of the head portions 731 of the movable posts 73 and the top of the middle guiding seat 72 (see Fig. 7). The clearance d is extremely small, such as in the range from 1nm to 20,000nm, but large enough to provide a travel distance for the movable posts 73 between a lowered position for electric discharge machining and an elevated position for slug removal. When the movable posts 73 move upward or downward, the expanded head portions 731 and the pads 77 serve as positioning members to restrict the movable posts 73 within the travel distance thereof.

The lower fixing seat 78 is fixedly connected to the electrode clamp 52 via an insulating plate 781, as shown in Fig. 2. As can be seen from Figs. 3, 5, 6 and 7, the lower fixing seat 78 is fixedly connected at a top to the bottom of the movable posts 73 via the pads 77. An annular locating groove 782 is formed on the top of the lower fixing seat 78 close to an outer periphery thereof. A dustproof ring 783 and an O-ring 784 are sequentially mounted in the annular locating groove 782 with the O-ring 784 tightly abutting on the bottom of the middle guiding seat 72. As can be seen from Figs. 3 and 5, the lower fixing seat 78 is provided on the top with a plurality of spring receiving holes 785 for receiving a locating spring 786 each. The locating springs 786 normally upward press against the bottom of the middle guiding seat 72, so as to maintain stable contact of the lower fixing seat 78 with the middle guiding seat 72. As can be seen from Fig. 3, the lower fixing seat 78 is also provided on the top with an opening 787 having a shape corresponding to that of the server carrier 75 for receiving the server carrier 75 therein.

The above-mentioned components for the direct-acting electrode position controller 7 of the present invention may be assembled together in any acceptable manner. For instance, to connect the upper fixing seat 71 to the middle guiding seat 72, first and second connecting screw holes 713, 723 are correspondingly formed on the upper and the middle seat 71, 72, respectively, and first connecting screws 791 are sequentially downward extended through the first connecting screw holes 713 into the second connecting screw holes 723.

To connect the push plate 76 to the movable posts 73, third and fourth connecting screw holes 761, 733 are correspondingly formed on the push plate 76 and the movable posts 73, respectively, and second connecting screws 792 are sequentially downward extended through the third connecting screw holes 761 into the fourth connecting screw holes 733.

To connect the middle guiding seat 72 to the server carrier 75, fifth and sixth connecting screw holes 724, 751 are correspondingly formed on the middle guiding seat 72 and the server carrier 75, respectively, and third connecting screws 793 are sequentially upward extended through the sixth connecting screwholes 751 into the fifthconnecting screw holes 724.

To connect the movable posts 73, the pads 77, and the lower fixing seat 78 to one another, seventh, eighth, and ninth connecting screw holes 734, 771, 788 are correspondingly formed on the movable posts 73, the pads 77, and the lower fixing seat 78, respectively, and fourth connecting screws 794 are sequentially upward extended through the ninth and the eighth connecting screw holes 788, 771 into the seventh connecting screw holes 734.

When the electric discharge machining and the slag removal are alternately operated on the electrical discharge machine with the direct-acting electrode position controller 7 of the present invention, it is possible to actuate the push rod 741 of the server 74 to move upward or downward under control of the controller 65 with the main shaft 5 in an unmoved condition. At this point, the push plate 76, the movable posts 73, the pads 77, the lower fixing seat 78, and the electrode 53 are brought to synchronously move upward to an elevated position or downward to a lowered position within the travel distance defined by the clearance d in speedy micro movements, as shown in Fig. 7 and 6, respectively. When the movable posts 73 of the direct-acting electrode position controller 7 are in the lowered position as shown in Fig. 6, a differential compensation is provided to the electrode 53 at a lowered position, enabling the electrode 53 to discharge in the electric discharge machining operation. And, when the movable posts 73 of the direct-acting electrode position controller 7 are in the elevated position as shown in Fig. 7, the electrical discharge machine is allowed to carry on the slag removal operation. When the electrode 53 is moved upward or downward along with the movable posts 73 of the direct-acting electrode position controller 7 of the present invention, it is completely not interfered by the oscillation caused by the main shaft 5. Therefore, the present invention advantageously improves the working efficiency of the electrical discharge machine and the precision of a machined workpiece.

Moreover, the direct-acting electrode position controller 7 of the present invention may be used with different electrical discharge machines for engraving, forming micro holes, linear cutting, polishing, electrolytic polishing, etc.

The present invention has been described with a preferred embodiment thereof and it is understood that many changes and modifications in the described embodiment can be carried out without departing from the scope and the spirit of the invention that is intended to be limited only by the appended claims.

## Claims

1. A direct-acting electrode position controller for electrical discharge machine, said electrical discharge machine including a bed, a Y-direction seat mounted on a top of said bed and driven by a Y-direction servomotor, an X-direction seat mounted on a top of said Y-direction seat and driven by an X-direction servomotor, a processing cell located on a top of said X-direction seat for a workpiece to fixedly positioned therein and having an amount of processing solution contained therein, a main shaft vertically located above said processing cell and driven by a Z-direction servomotor to vertically move upward and downward, and an electrode connected to a lower end of said main shaft via an electrode clamp to discharge in said processing solution and thereby have said workpiece machined; said direct-acting electrode position controller being mounted between said main shaft and said electrode clamp of said electrical discharge machine and comprising an upper fixing seat fixedly connected to main shaft, and a lower fixing seat fixedly connected to said electrode clamp and movable upward or downward relative to said upper fixing seat to thereby elevate or lower said electrode within a predetermined travel distance while said main shaft is unmoved.

2. The direct-acting electrode position controller for electrical discharge machine as claimed in claim 1, further comprising:
a middle guiding seat being fixedly connected to a bottom of said upper fixing seat, and having a plurality of vertical guiding holes internally provided thereon, and a server mounting hole provided at a central area thereof;
a plurality of movable posts, each of which having an expanded head portion and a shank portion; said shank portions being separately slidably mounted in said guiding holes on said middle guiding seat with said expanded head portions exposed from and located on a top of said middle guiding seat;
a server being mounted in said server mounting hole at the center of said middle guiding seat, said server including a push rod, which is controlled by a controller in an electrical control box of said electrical discharge machine to move upward or downward;
a server carrier fixed to a bottom of said middle guiding seat to support said server thereon;
a push plate being located in a recession formed at the bottom of said upper fixing seat and fixedly connected to tops of said movable posts to abut on a top of said push rod of said server and thereby moving upward or downward along with said push rod; and
a plurality of movable post pads located below said middle guiding seat corresponding to bottoms of said movable posts; a distance between a top of each of said pads and a bottom of said expanded head portion of each said movable post corresponding to said pad being larger than a height of said middle guiding seat, such that a clearance exists between the top of said pads and the bottom of said middle guiding seat, or between the bottoms of said expanded head portions of said movable posts and the top of saidmiddle guiding seat; and
wherein said lower fixing seat is fixedly connected to the bottoms of said movable posts via said movable post pads.

3. The direct-acting electrode position controller for electrical discharge machine as claimed in claim 2, wherein said lower fixing seat has an annular locating groove formed on a top close to an outer periphery thereof, and a dustproof ring and an O-ring being sequentially mounted in said annular locating groove to tightly abut on the bottom of said middle guiding seat.

4. The direct-acting electrode position controller for electrical discharge machine as claimed in claim 2, wherein said lower fixing seat is formed on a top with a plurality of spring receiving holes for receiving a locating spring each, and said locating springs having upper ends normallypressing against the bottom of said middle guiding seat.

5. The direct-acting electrode position controller for electrical discharge machine as claimed in claim 2, wherein said lower fixing seat is formed on a top with an opening having a shape corresponding to that of said server carrier for receiving said server carrier therein.

6. The direct-acting electrode position controller for electrical discharge machine as claimed in claim 1, wherein said electrical discharge machine is adapted to engrave a workpiece through electric discharge machining.

7. The direct-acting electrode position controller for electrical discharge machine as claimed in claim 1, wherein said electrical discharge machine is adapted to form micro holes on a workpiece through electric discharge machining.

8. The direct-acting electrode position controller for electrical discharge machine as claimed in claim 1, wherein said electrical discharge machine is adapted to linearly cut a workpiece through electric discharge machining.

9. The direct-acting electrode position controller for electrical discharge machine as claimed in claim 1, wherein said electrical discharge machine is adapted to polish a workpiece through electric discharge machining.

10. The direct-acting electrode position controller for electrical discharge machine as claimed in claim 1, wherein said electrical discharge machine is adapted to perform electrolytic polishing of a workpiece through electric discharge machining.
